# EUROPÄISCHE PATENTANMELDUNG

(11) **EP 1 898 283 A2**
(43) Veröffentlichungstag der Anmeldung: **12.03.2008**
(21) Anmeldenummer: 07017270.5
(22) Anmeldetag: 04.09.2007
(51) Int. Cl.: G05B 19/05

(54) **Anzeige- und Bedienverfahren für ein Elektrogerät**

(30) Priorität: 05.09.2006 DE 102006042630
(71) Anmelder: E.G.O. ELEKTRO-GERÄTEBAU GmbH, 75038 Oberderdingen (DE)
(72) Erfinder: Baier, Martin, 76275 Ettlingen (DE)
(74) Vertreter: Patentanwälte Ruff, Wilhelm, Beier, Dauster & Partner

(57) **Zusammenfassung**

Auf einer Anzeige (11) für beispielsweise eine Waschmaschine können auf einer Anzeigefläche (12) verschiedene Menüpunkte (16) und einzelne Wahlmöglichkeiten (17) dafür angezeigt werden. Eine interne Steuerung erfasst die Häufigkeit für jede bisher gewählte Wahlmöglichkeit (17) und listet die bisher am häufigsten gewählte Wahlmöglichkeit jeweils zuerst unter einem Menüpunkt (16) auf. Ändern sich die gewählten Häufigkeiten, so ändert sich auch die Reihenfolge bzw. Art der Auflistung und Anzeige.

## Beschreibung

### Anwendungsgebiet und Stand der Technik

Die Erfindung betrifft ein Anzeige- bzw. Bedienverfahren für Elektrogeräte gemäß dem Oberbegriff des Anspruchs 1. Darauf werden Wahlmöglichkeiten bzw. Betriebsparameter dargestellt, die im Umfang dieser Anmeldung jeweils nur als Wahlmöglichkeiten bezeichnet werden. Des weiteren betrifft sie ein mit einer entsprechenden Anzeige ausgestattetes Elektrogerät.

Es ist beispielsweise aus der DE 10326948 A1 bekannt, an einem sogenannten Touch-Screen als Anzeige und Bedien-Schnittstelle bei einer Waschmaschine unterschiedliche Wahlmöglichkeiten unterschiedlich darzustellen. Insbesondere werden dort nach Auswahl eines bestimmten Programmablaufs bestimmte Wahlmöglichkeiten gar nicht mehr dargestellt bzw. nicht mehr zur Auswahl angeboten. Hierbei ist jedoch ein sehr großes und recht aufwendiges Display vorgesehen, auf dem grundsätzlich alle jeweils auswählbaren Wahlmöglichkeiten bzw. Betriebsparameter gleichzeitig dargestellt werden können.

### Aufgabe und Lösung

Der Erfindung liegt die Aufgabe zugrunde, ein eingangs genanntes Verfahren zu schaffen sowie ein mit einer entsprechenden Anzeige ausgestattetes Elektrogerät, mit dem Nachteile des Standes der Technik vermieden werden können und insbesondere eine besonders bedienerfreundliche und leicht zu verstehende Auswahl möglich ist.

Gelöst wird diese Aufgabe durch ein Verfahren mit den Merkmalen des Anspruchs 1 sowie ein Elektrogerät mit den Merkmalen des Anspruchs 11. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Es ist vorgesehen, dass aus einer Anzahl von Wahlmöglichkeiten bzw. Betriebsparametern, die auf einer Anzeige, beispielsweise einem Display, dargestellt werden, unterschiedliche Kategorien ausgewählt werden für einen anschließenden Betrieb und innerhalb einer Kategorie ein Wert oder Betriebsparameter. Solche Kategorien sind beispielsweise bei einem Backofen Beheizungsart oder Temperatur. Wahlmöglichkeiten, die zu einer Kategorie gehören, also aus denen während eines Bedienschrittes ausgewählt wird, können auf der Anzeige veränderbar dargestellt, herausgehoben oder in ihrer Reihenfolge verändert werden. Dabei wird von einer zugehörigen Steuerung im Rahmen des Verfahrens festgestellt, wie häufig jede Wahlmöglichkeit bisher gewählt worden ist. Die bisher am häufigsten gewählte Wahlmöglichkeit wird dann zuerst oder herausgehoben dargestellt. Mit einem an der Anzeige bzw. dem entsprechenden Elektrogerät vorgesehenen Auswahlelement kann diese Wahlmöglichkeit dann einfach und mit einer minimalen Anzahl von Schritten ausgewählt werden.

Anders ausgedrückt bedeutet das also, dass bei dem erfindungsgemäßen Verfahren der bislang häufigste Betriebsparameter bzw. die am häufigsten gewählte Wahlmöglichkeit ermittelt wird und als erste oder Vorzugs- Wahlmöglichkeit auf der Anzeige dargestellt und somit zur Auswahl angeboten wird. Vor allem das Anbieten an erster Stelle einer Darstellung bzw. Auflistung auf einer Anzeige wird als besonders vorteilhaft angesehen. Somit ist es für eine Bedienperson schnell und leicht möglich, quasi entsprechend einem persönlichen Benutzerprofil das Elektrogerät möglichst schnell und einfach zu bedienen. Die anderen Wahlmöglichkeiten gehen nicht verloren und sind nur mit etwas mehr Aufwand auswählbar.

In vorteilhafter Ausgestaltung der Erfindung kann die zuerst bzw. herausgehoben dargestellte Wahlmöglichkeit durch Bedienung genau eines einzigen Bedienelementes ausgewählt werden. Dies bedeutet also, dass nach Wahl der zu bestimmenden Kategorie die bislang am häufigsten gewählte Wahlmöglichkeit zuerst dargestellt wird und vorteilhaft gleichzeitig als sozusagen vorausgewählt gilt. Dann muss lediglich noch ein entsprechendes Bedienelement betätigt werden, also ein einziger Bedienschritt durchgeführt werden, um diese Wahlmöglichkeit auszuwählen. Soll eine andere als die bevorzugte Wahlmöglichkeit ausgewählt werden, so ist auf an sich bekannte Art und Weise ein Menü odgl. zu durchsuchen.

Die Wahlmöglichkeiten sind auf einer Anzeige dargestellt, vorzugsweise auf einer Volltext-Anzeige wie einem Bildschirm oder sogar eine Touch-Screen-Anzeige. Dabei sind zumindest in manchen Kategorien mehr Wahlmöglichkeiten vorhanden bzw. auswählbar, als die Anzeige gleichzeitig darstellen kann. Insofern ist es von besonderer Bedeutung, wenn eben die vorgenannten bevorzugten Wahlmöglichkeiten zuerst dargestellt werden.

Bevorzugt wird fabrikationsseitig bzw. herstellerseitig eine bestimmte Reihenfolge oder Heraushebung von Wahlmöglichkeiten vorgegeben. Dies ist beispielsweise bei einem Backofen die Wahlmöglichkeit von "Heißluft" für die Beheizungsart und "180°C" für die Temperatur. Dies sind in der Praxis die am häufigst gewählten Wahlmöglichkeiten. Insofern ist bereits eine sinnvolle Vorauswahl für einen Betrieb eingerichtet.

In weiterer Ausgestaltung der Erfindung ist vorgesehen, dass bei Beginn der Inbetriebnahme des Elektrogerätes bzw. nach Installation und Anschluss an eine Stromversorgung die Anzahl und Art der Auswahlen und Bedienungen in die Berechnung für die Häufigkeit einbezogen wird. Damit kann eine vorgenannte fabrikationsseitige Voreinstellung entweder sofort verändert werden oder aber, wenn diese mit einer bestimmten Häufigkeit angesetzt worden ist, nach einer bestimmten Anzahl von gleichen Bedienungen übertroffen werden.

Des weiteren ist es möglich, nicht nur einfach die Anzahl von bisherigen Auswahlen zu zählen. Sie können auch noch mit einer weiteren Gewichtung durch den Zeitpunkt der Auswahl einer Wahlmöglichkeit versehen werden. Dies bedeutet also, dass länger zurückliegende Auswahlen weniger stark gewichtet werden als vor kurzem gefolgte Auswahlen, da diese eher dem aktuellen Auswahlverhalten der Bedienperson entsprechen. Der Unterschied kann beispielsweise einen Faktor von 1,5 und 3 betragen. Dadurch kann eben eine Anpassung an ein verändertes Benutzerverhalten erreicht werden.

Es kann auch vorgesehen sein, dass bestimmte Auswahlen, die beispielsweise längere Zeit zurückliegen wie mehr als einen Monat odgl., nicht mehr berücksichtigt werden. Somit kann eine Aktualisierung erfolgen. Gemäß einer weiteren Möglichkeit kann vorgesehen sein, dass immer nur die letzten Auswahlen bis zu einer bestimmten Anzahl gezählt werden. Dies können beispielsweise etwa 50 bis 200 Auswahlen sein. Für jede weitere gerade getroffene Auswahl wird eine Auswahl, die gerade an dieser Grenze war, gelöscht und nicht mehr berücksichtigt, ähnlich wie bei einem Überlaufspeicher. Dies ist auch eine Alternative festzustellen, welche Auswahl wie lange zurückliegt, allerdings eben nicht in genauen Zeiteinheiten, sondern nach Anzahl.

In weiterer Ausgestaltung der Erfindung ist vorgesehen, dass nicht nur die häufigste Wahlmöglichkeit zuerst in einer Auflistung odgl. angezeigt wird. Auch die Reihenfolge der nachfolgenden Wahlmöglichkeiten kann von der bisher gewählten Häufigkeit abhängen, so dass tatsächlich die meisten oder alle Wahlmöglichkeiten in Abhängigkeit von ihrer bisher gewählten Häufigkeit dargestellt werden.

Vorteilhaft ist vorgesehen, dass eine wie vorstehend beschrieben ermittelte Auswertung der Auswahlen selbst nach einer Unterbrechung in der Stromversorgung erhalten bleibt, also beispielsweise bei einem Umstellen oder Umzug des Elektrogerätes. Hierfür kann ein entsprechender nicht flüchtiger Speicher vorhanden sein. In bevorzugter weiterer Ausgestaltung ist jedoch vorgesehen, dass eine derartige Auswahl bzw. Festlegung gelöscht werden kann, wobei unter Umständen das Elektrogerät in seinen Auslieferzustand zurückversetzt werden kann. Hierfür kann ein spezielles Funktions- bzw. Bedienelement betätigt werden oder aber durch eine entsprechende Bedien-Kombination mehrerer Bedienelemente. Dadurch kann beispielsweise bei einer neuen hauptsächlichen Bedienperson sofort wieder eine individuelle Einstellung auf deren Gewohnheiten erfolgen. Dadurch wird das Verfahren noch komfortabler.

Die zuvor genannte Anzeige in einem erfindungsgemäßen Elektrogerät zeichnet sich durch die vorstehend beschriebenen Merkmale aus, insbesondere weist sie eine Anzeigenfläche auf, vorteilhaft eine Grafik-Anzeige bzw. besonders vorteilhaft eine sogenannte Touch-Screen-Anzeige.

Sie ist mit mehreren Bedienelementen für Auswahl sowie Blättern bzw. bewegen durch ein dargestelltes Menü verbunden. Diese können im Falle einer Touch-Screen-Anzeige als separate Bedienelemente wegfallen, da sie in der Touch-Screen-Anzeige integriert sind. Des weiteren weist die Anzeige eine Steuerung auf, unter Umständen zusammen mit dem Elektrogerät. In dieser Steuerung ist neben einem Steuerbaustein auch der vorgenannte Speicher enthalten. Als Bedienelemente können neben Berührungsschaltern, die beispielsweise optisch oder kapazitiv arbeiten können, noch mechanische Schalter, Drehschalter oder sonstige Schalter mit Encodern verwendet werden.

Besonders vorteilhaft kann das beschriebene Verfahren bei Elektrogeräten wie Backöfen odgl. zum Einsatz kommen, die bestimmte Automatikprogramme aufweisen. Bei diesen werden von einer Bedienperson nur wenige Parameter vorgegeben und bestimmen den folgenden Ablauf eines Automatikprogramms.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. In den Zeichnungen zeigen:
- Fig. 1: eine Ansicht einer betriebsfertigen Anzeige einer Waschmaschine mit verschiedenen Menüpunkte und Wahlmöglichkeiten und verschiedenen Bedienelementen,
- Fig. 2: verschiedene Wahlmöglichkeiten der einzelnen Menüpunkte der Anzeige gemäß Fig. 1,
- Fig. 3: die Anzeige nach Fig. 1 mit der für jeden Menüpunkt bisher am häufigsten gewählten Wahlmöglichkeit,
- Fig. 4: eine Anzeige ähnlich Fig. 1 für einen Backofen,
- Fig. 5: verschiedene Wahlmöglichkeiten für die einzelnen Menüpunkte der Anzeige gemäß Fig. 4,
- Fig. 6: die Anzeige gemäß Fig. 4 mit den bisher am häufigsten gewählten Wahlmöglichkeiten,
- Fig. 7: nach Änderung des Benutzerverhaltens eine gegenüber Fig. 6 geänderte Anzeige mit den aktuell am häufigsten gewählten Wahlmöglichkeiten,
- Fig. 8-10: eine weitere Anzeige für einen Backofen in verschiedenen Betriebszuständen während einer Auswahl.

### Detaillierte Beschreibung der Ausführungsbeispiele

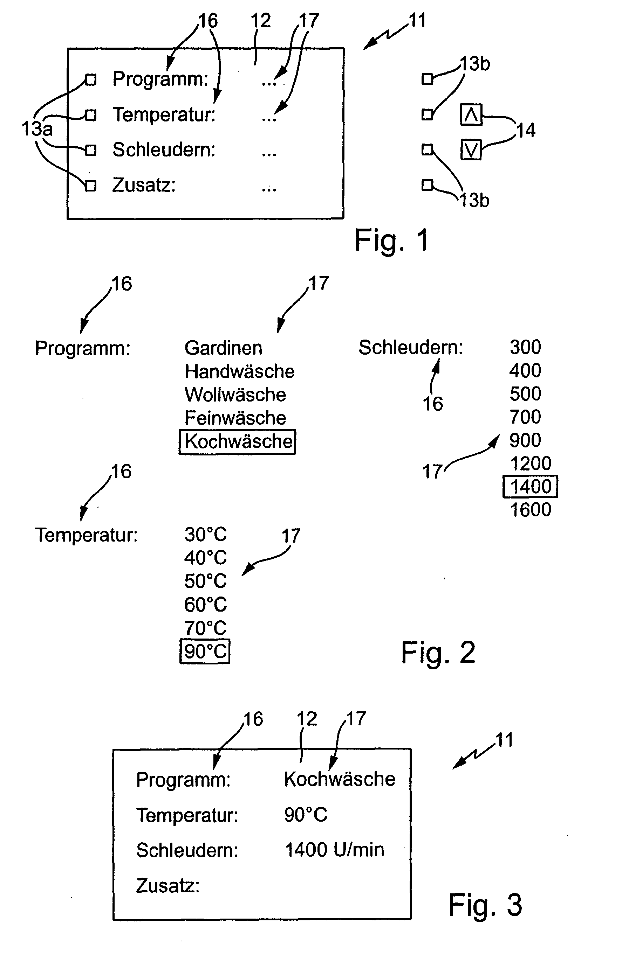

In Fig. 1 ist eine Anzeige 11 dargestellt, wie sie insbesondere in einer Waschmaschine vorhanden ist bzw. eingebaut ist. Die Anzeige 11 weist eine Anzeigefläche 12 auf, beispielsweise als kleiner LC-Bildschirm, auf der verschiedene Menüpunkte 16 dargestellt sind. Zu diesen Menüpunkten 16 gehören jeweils verschiedene Wahlmöglichkeiten 17, von denen in Fig. 1 jeweils eine Wahlmöglichkeit dargestellt ist. Zur Bedienung bzw. Auswahl sind entweder integrierte Bedienelemente 13a vorgesehen, die links neben den Menüpunkten 16 liegen und so in die Anzeige 11 bzw. die Anzeigefläche 12 integriert sind. Dies bietet sich insbesondere bei einer sogenannten Touch-Screen-Anzeige an. Alternativ können außerhalb der Anzeigefläche 12, beispielsweise rechts daneben, die externen Bedienelemente 13b vorgesehen sein, beispielsweise als Berührungsschalter. Noch einmal rechts daneben sind weitere Bedienelemente 14 vorgesehen, die dazu ausgebildet sind, innerhalb eines Menüpunktes 16 verschiedene Wahlmöglichkeiten 17 durchlaufen zu lassen bzw. auszuwählen.

In Fig. 2 sind für die Menüpunkte 16 "Programme", "Temperatur" und "Schleudern" einige verschiedene Wahlmöglichkeiten 17 dargestellt. Hierzu wird vor allem auf die Fig. 2 selber verwiesen und diese Wahlmöglichkeiten 17 werden nicht einzeln aufgeführt. Sie können verschieden geordnet sein, beispielsweise alphabetisch oder, wie bei "Temperatur" oder "Schleudern", in auf- oder absteigender Reihenfolge. Die Auflistung gemäß Fig. 2 ist eine grundsätzliche bzw. willkürlich gewählte. Sie enthält noch nicht den erfindungsgemäßen Gedanken der Anordnung bzw. Reihenfolge nach Häufigkeit.

Die einzelnen Wahlmöglichkeiten 17 der Menüpunkte 16 nach Fig. 2 können in sich nach Häufigkeit geordnet sein, müssen es jedoch nicht. Die bisher am häufigsten ausgewählten sind durch Rahmen markiert. Sie werden dann auch angezeigt. Insbesondere ergibt sich dann für die Anzeige 11 gemäß Fig. 1 die in Fig. 3 dargestellte Anordnung bzw. Vorauswahl von Menüpunkten. Für den Menüpunkt "Programm" ist es hier die bislang am häufigsten gewählte Wahlmöglichkeit "Kochwäsche". Für den Menüpunkt "Temperatur" sind dies 90°C und für "Schleudern" sind es 1400 U/min. Für den Menüpunkt "Zusatz" ist nichts ausgewählt.

Die Anzeige 11 präsentiert sich also bei Inbetriebnahme bzw. Einschalten der Waschmaschine üblicherweise in der in Fig. 3 dargestellten Konfiguration und bietet dadurch die bislang am häufigsten gewählten Wahlmöglichkeiten sozusagen als Vorauswahl an. Ob diese rein nach der Anzahl am häufigsten gewählt worden sind oder mit der zuvor beschriebenen Gewichtung nach Zeitpunkt der Auswahl spielt hier keine Rolle, es kann eben beides einfließen.

Will eine Bedienperson von dieser favorisierten Anzeige abweichen für einen anderen Betrieb, so kann über die Bedienelemente 13a bzw. 13b und 14 ein entsprechender Menüpunkt 16 aufgerufen bzw. angewählt werden. Dabei erscheint zwar wiederum die hier bislang am häufigsten gewählte Wahlmöglichkeit 17 zuerst. Insbesondere über die Bedienelemente 14 kann jedoch eine andere Wahlmöglichkeit ausgewählt werden für einen nachfolgenden Betrieb, nämlich eine aus den Listen gem. Fig. 2.

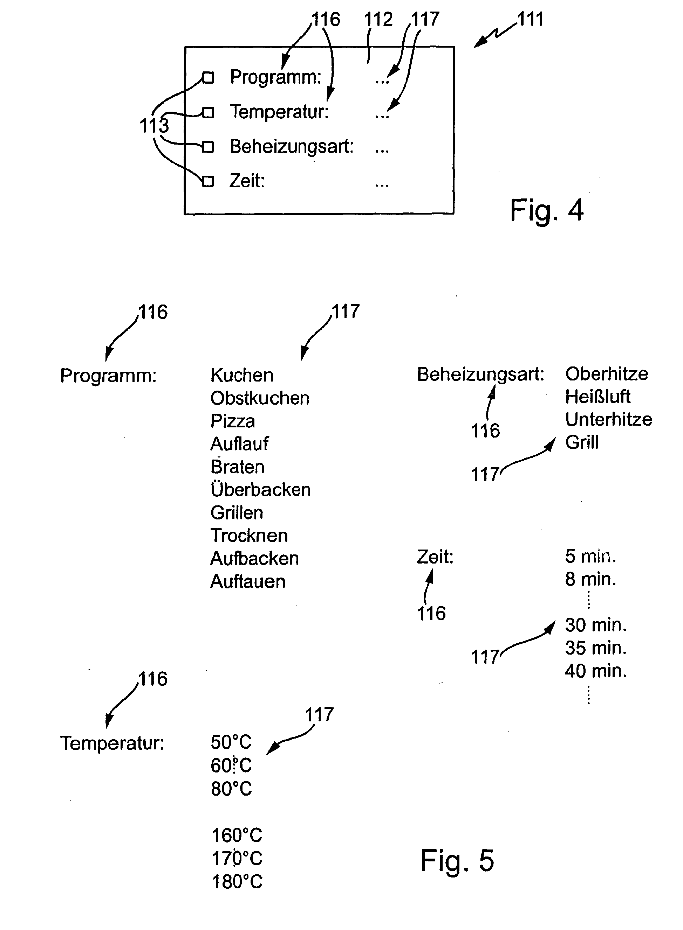

In Fig. 4 ist eine Abwandlung einer Anzeige 111 dargestellt mit einer Anzeigefläche 112, auf der Menüpunkte 116 und Wahlmöglichkeiten 117 dargestellt sind. Über integrierte Bedienelemente 113 kann eine Bedienung erfolgen. Im wesentlichen entspricht die Anzeige 111 somit der Anzeige 11 aus Fig. 1.

In Fig. 5 sind verschiedene Möglichkeiten für Menüpunkte 116 mit jeweils gegebenen Wahlmöglichkeiten 117 dargestellt. Angesichts der Erläuterungen zu den vorherigen Zeichnungen ist dies ohne weiteres verständlich.

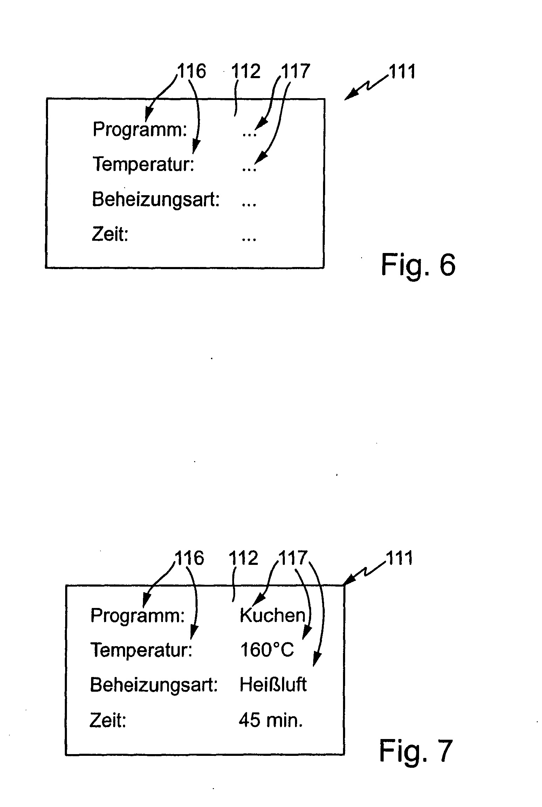

In Fig. 6 ist die Anzeige 111 in der Betriebsart bzw. mit den Menüpunkten 116 und Wahlmöglichkeiten 117 dargestellt, die bislang am häufigsten gewählt worden sind. Dies entspricht im wesentlichen Fig. 3.

In Fig. 7 ist eine geänderte Anzeige 111 dargestellt. Hier haben sich aufgrund eines geänderten Verhaltens einer Bedienperson die Menüpunkte "Programm" und "Temperatur" geändert. Anstelle von "Braten", "180°C" und 120 min sind nun aus den Menüpunkten gemäß Fig. 5 "Kuchen", "160°C" und 45 min am häufigsten gewählt worden und werden deswegen in der favorisierten Anzeige gem. Fig. 7 dargestellt. Die Bezeichnungsart ist mit "Heißluft" gleich geblieben.

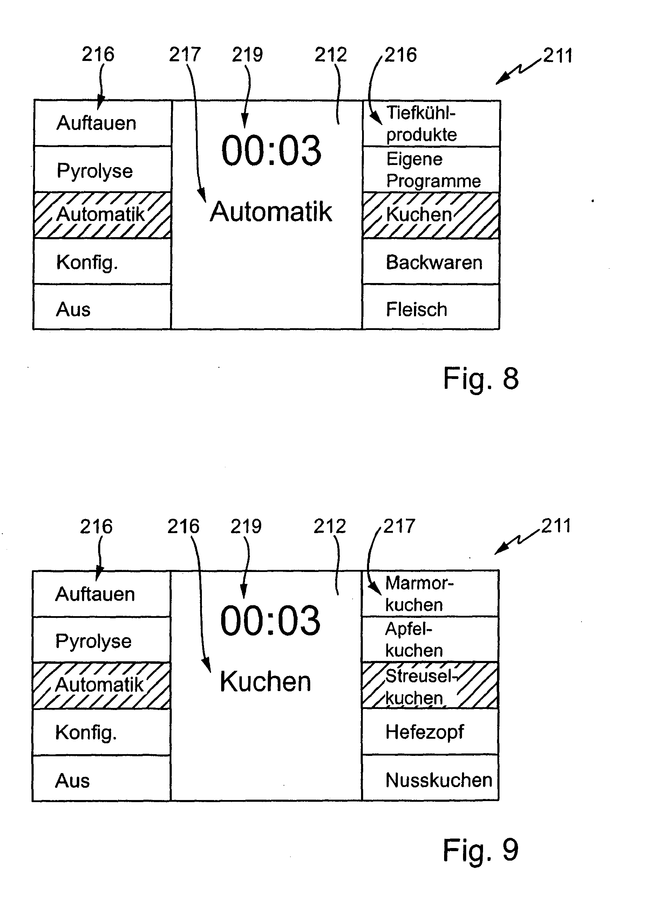

In Fig. 8 ist eine weitere Abwandlung einer Anzeige 211 dargestellt mit einer Anzeigefläche 212, auf der Menüpunkte und Wahlmöglichkeiten etwas anders dargestellt als bei den vorherigen Anzeigen. Hier ist nicht zwingend wie bei Fig. 1 links ein Menüpunkt und rechts eine entsprechende mögliche Auswahl dargestellt, sondern teilweise im Wechsel. So sind in einem linken Bereich der Anzeigefläche 212 verschiedene Menüpunkte 216 dargestellt, die verschiedene Betriebsarten darstellen. In einem mittleren Bereich ist eine Zeit-Anzeige 219 dargestellt, welche neben der Timer-Funktion auch eine Uhrzeit anzeigen kann. Im rechten Bereich der Anzeigefläche 212 sind verschiedene Produkte bzw. Nahrungsmittel dargestellt, die zubereitet werden können. Die Anzeige 211 gemäß Fig. 8 kann nach dem Einschalten eines Backofens aus einem Aus-Zustand oder aus einem Standby-Zustand so aussehen.

Es ist in Fig. 8 zu ersehen, dass bislang der Backofen am häufigsten im Automatik-Betriebsmodus genutzt worden ist und deswegen in der Mitte der Anzeigefläche 212 "Automatik" angezeigt ist als Wahlmöglichkeit 217. Da in Fig. 8 keine Bedienelemente dargestellt sind, kann zum Verständnis der Funktion davon ausgegangen werden, dass die Anzeige 211 mit einem Berührungsbildschirm, einem sogenannten Touch-Screen, ausgestattet ist. Alternativ könnten, ähnlich wie in Fig. 1 gezeigt, zumindest an einer Seite der Anzeige 211, vorzugsweise an beiden Seiten, Bedienelemente zum Durchblättern durch Menülisten und zum Bestätigen vorgesehen sein.

Nachdem die Wahlmöglichkeit "Automatik" bereits sowohl im linken Bereich der Anzeigefläche durch die Schraffierung angedeutet hervorgehoben ist als auch in der Mitte bereits dargestellt ist, braucht dies lediglich bestätigt zu werden. Dies kann bei einem Touch-Screen durch Auflegen des Fingers auf das linke hervorgehobene Feld mit der Beschriftung "Automatik" erfolgen. Alternativ können die genannten separaten Bedienelemente vorgesehen sein.

Des weiteren kann aus Fig. 8 erkannt werden, dass von der Häufigkeit bzw. Historie der bisherigen Bedienungen bei Automatik-Betrieb "Kuchen" gewünscht wurde, deswegen wird rechts in der Anzeigefläche 212 das Feld mit "Kuchen" besonders hervorgehoben, wie durch die Schraffur verdeutlicht wird. Es braucht also lediglich "Kuchen" als bislang häufigste Wahlmöglichkeit wiederum bestätigt zu werden.

Nach der Bestätigung von "Kuchen" ändert sich die Anzeige 211 zu der Darstellung nach Fig. 9. Anstelle der Anzeige von "Automatik" im mittleren Bereich der Anzeigefläche 212 wird nun "Kuchen" angezeigt. Auf die vorherigen Erläuterungen bezogen war gemäß Fig. 8 "Kuchen" eine Wahlmöglichkeit unter mehreren, gleichwertigen oder gleichartigen Wahlmöglichkeiten. In Fig. 9 wiederum ist "Kuchen" ein Menüpunkt 216 und im rechten Bereich der Anzeigefläche 212 sind nun als Wahlmöglichkeiten 217 verschiedene Kuchenarten dargestellt. Durch die wiederum schraffiert dargestellte Hervorhebung von "Streuselkuchen" ist zu ersehen, dass bislang am häufigsten "Streuselkuchen" ausgewählt worden war unter den verschiedenen Kuchenarten. Soll wiederum Streuselkuchen gebacken werden, so braucht diese Vorauswahl bzw. Wahlmöglichkeit 217 lediglich bestätigt zu werden.

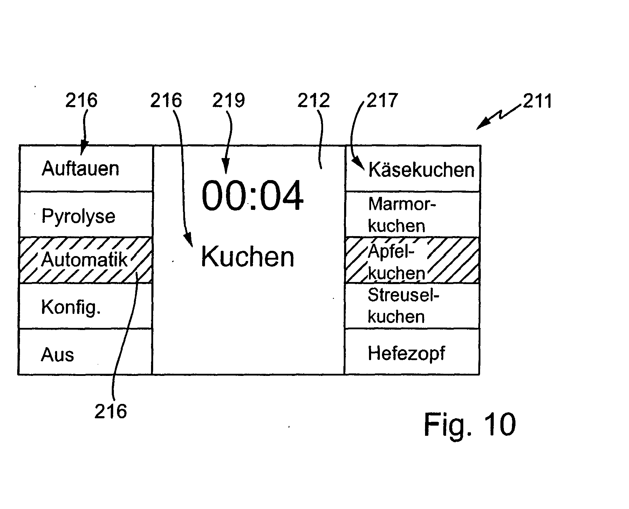

Soll jedoch ein anderer Kuchen gebacken werden, beispielsweise "Apfelkuchen", so muss dieser erst ausgewählt und dann bestätigt werden. Das Auswählen kann, wie zuvor bereits beschrieben worden ist, bei einem Touch-Screen durch Berühren des Feldes mit der Beschriftung "Apfelkuchen" erfolgen. Alternativ können externe Bedienelemente verwendet werden. Diese Auswahl von "Apfelkuchen" ist in Fig. 10 wiederum durch Schraffierung dargestellt. Nun muss lediglich eine Bestätigung von "Apfelkuchen" als Wahlmöglichkeit 217 für den Menüpunkt "Kuchen" 216 vorgenommen werden und dann kann der Betrieb des Backofens eigentlich starten.

Ein gewisser Unterschied zwischen den Anzeigen gemäß den Fig. 1 bis 7 einerseits und der Anzeige gemäß der Fig. 8 bis 10 andererseits liegt darin, dass bei den Fig. 1 bis 7 die Menüpunkte fest vorgegeben sind und jeweils nur noch eine aus mehreren Wahlmöglichkeiten dafür ausgesucht werden muss. Bei der Anzeige gemäß der Fig. 8 bis 10 können manche Wahlmöglichkeiten wie der "Kuchen" gemäß Fig. 8 zu einem Menüpunkt gemäß Fig. 9 werden und diesem dann wieder verschiedene Wahlmöglichkeiten nachfolgen.

Die Ermittlung der zuerst bzw. herausgehoben angebotenen Wahlmöglichkeiten bei einer Anzeige gemäß der Fig. 8 bis 10 kann auf eine der eingangs genannten Arten erfolgen. Beispielsweise erfolgt dies durch Berücksichtigung der zuletzt gewählten Auswahlmöglichkeiten, der bisher am häufigsten oder der innerhalb eines bestimmten zurückliegenden Zeitabschnitts wie einem oder zwei Monaten ausgewählten.

Aus diesen Erläuterungen wird für den Fachmann klar, was der Kern der Erfindung ist, wie sie funktioniert und wie sie realisiert werden kann.

## Patentansprüche

1. Anzeige- und Bedienverfahren für Elektrogeräte, wobei aus einer Anzahl von auf einer Anzeige (12, 112, 212) dargestellten Wahlmöglichkeiten (17, 117, 217) bzw. Betriebsparametern unterschiedliche Kategorien (16, 116, 216) ausgewählt werden für einen anschließenden Betrieb, **dadurch gekennzeichnet, dass** Wahlmöglichkeiten (17, 117, 217) bzw. Betriebsparameter einer Kategorie (16, 116, 216) in veränderbarer Darstellung, Heraushebung oder Reihenfolge darstellbar sind, wobei eine Häufigkeit der bisher gewählten Wahlmöglichkeiten (17, 117, 217) bzw. Betriebsparameter festgestellt wird und die bisher am häufigsten gewählte Wahlmöglichkeit (17, 117, 217) bzw. Betriebsparameter zuerst oder herausgehoben dargestellt wird für eine Auswahl durch eine Bedienperson, wobei sie mit einem Auswahlelement (13a, b, 14, 113) durch eine möglichst geringe Anzahl von Schritten auswählbar ist.

2. Verfahren nach Anspruch 1, **dadurch gekennzeichnet, dass** die zuerst oder herausgehoben dargestellte Wahlmöglichkeit (17, 117, 217) durch Bedienung genau eines einzigen Bedienelementes (13a, b, 14, 113) ausgewählt wird.

3. Verfahren nach Anspruch 1 oder 2, **dadurch gekennzeichnet, dass** eine Anzahl von Wahlmöglichkeiten (17, 117, 217) auf einer Anzeige (12, 112, 212) dargestellt wird, wobei mehr Wahlmöglichkeiten (17, 117, 217) einer Kategorie (16, 116, 216) gegeben sind als von der Anzeige (12, 112, 212) auf einmal bzw. gleichzeitig darstellbar ist.

4. Verfahren nach einem der vorhergehenden Ansprüche, **dadurch gekennzeichnet, dass** fabrikationsseitig eine bestimmte Reihenfolge oder Heraushebung der Wahlmöglichkeiten (17, 117, 217) vorgegeben wird.

5. Verfahren nach Anspruch 4, **dadurch gekennzeichnet, dass** bei Beginn der Inbetriebnahme des Elektrogerätes bzw. nach Anschluss an eine Stromversorgung die Anzahl und Art der Auswahlen und Bedienungen in die Berechnung für die Häufigkeit einbezogen wird und die danach bestimmte Heraushebung oder Reihenfolge sofort angewandt wird.

6. Verfahren nach Anspruch 4 oder 5, **dadurch gekennzeichnet, dass** eine zusätzliche Gewichtung der Häufigkeit durch den Zeitpunkt der Auswahl einer Wahlmöglichkeit (17, 117, 217) hinzugenommen wird, wobei länger zurückliegende Auswahlen weniger stark gewichtet werden als kürzlich erfolgte Auswahlen.

7. Verfahren nach einem der vorhergehenden Ansprüche, **dadurch gekennzeichnet, dass** Auswahlen und Bedienungen, die längere Zeit zurückliegen, vorzugsweise im Bereich von einem oder mehreren Monaten, nicht mehr berücksichtigt werden.

8. Verfahren nach einem der vorhergehenden Ansprüche, **dadurch gekennzeichnet, dass** nur eine bestimmte Anzahl von Auswahlen und Bedienungen berücksichtigt wird derart, dass nur die letzten Auswahlen und Bedienungen bis zu dieser Anzahl berücksichtigt werden und die früheren, die diese Anzahl überschreiten, nicht mehr berücksichtigt werden, wobei es vorzugsweise maximal 200 Auswahlen sind.

9. Verfahren nach einem der vorhergehenden Ansprüche, **dadurch gekennzeichnet, dass** die Einstellung bzw. Auswertung der Auswahlen auch bei Unterbrechung der Stromversorgung erhalten bleibt.

10. Verfahren nach einem der vorhergehenden Ansprüche, **dadurch gekennzeichnet, dass** die Auswahl bzw. Festlegung löschbar ist bzw. das Elektrogerät in seinen Auslieferzustand zurückversetzbar ist, insbesondere durch Betätigen eines speziellen Funktionselementes oder mehrerer spezieller Funktionselemente.

11. Elektrogerät mit einer Anzeige (12, 112, 212), die dazu ausgebildet ist, das Verfahren nach einem der vorhergehenden Ansprüche durchzuführen.

12. Elektrogerät nach Anspruch 11, **gekennzeichnet durch** eine Anzeige (12, 112, 212) mit frei darstellbaren Zeichen und Bedienelementen (13a, b, 14, 113) zur Auswahl und zur Bedienung des Elektrogeräts, wobei vorzugsweise die Bedienelemente (13b, 14) getrennt ausgeführt sind von der Anzeige (12, 112, 212).

13. Elektrogerät nach Anspruch 11 oder 12, **dadurch gekennzeichnet, dass** die Anzeige (12, 112, 212) ein Touch-Screen ist, in dem die Bedienelemente (13a, 113) integriert sind.
